# EUROPÄISCHE PATENTSCHRIFT

(11) **EP 2 123 130 B1**
(45) Veröffentlichungstag und Bekanntmachung des Hinweises auf die Patenterteilung: **26.06.2019**
(21) Anmeldenummer: 07857389.6
(22) Anmeldetag: 11.12.2007
(51) Int. Cl.: H05B 33/08

(54) **ANSTEUERUNGSEINRICHTUNG UND VERFAHREN ZUM BETRIEB WENIGSTENS EINER REIHENSCHALTUNG VON LEUCHTDIODEN**
DRIVE DEVICE AND METHOD FOR OPERATING AT LEAST ONE SERIES CIRCUIT OF LIGHT-EMITTING DIODES
MODULE D'ACTIVATION ET PROCÉDÉ DE FONCTIONNEMENT D'AU MOINS UN CIRCUIT DE DIODES ÉLECTROLUMINESCENTES EN SÉRIE

(30) Priorität: 15.12.2006 DE 102006059355
(43) Veröffentlichungstag der Anmeldung: 25.11.2009
(73) Patentinhaber: Robert Bosch GmbH, 70442 Stuttgart (DE)
(72) Erfinder: KRESPACH, Andreas, 71272 Renningen (DE); WENK, Stephan, 70176 Stuttgart (DE)
(86) Internationale Anmeldenummer: PCT/EP2007/063702
(87) Internationale Veröffentlichungsnummer: WO 2008/071700

(56) Entgegenhaltungen:
- EP-A- 1 006 506
- WO-A-2004/021744
- WO-A-2006/097329
- WO-A-2006/136321
- DE-A1- 19 848 925
- DE-A1-102005 012 662
- US-A1- 2003 227 265
- US-B1- 6 943 504

## Beschreibung

### Stand der Technik

Die Erfindung geht aus von einer Ansteuereinrichtung oder einem Verfahren nach Gattung der unabhängigen Ansprüche. Aus der DE 198 41 270 A1 ist bereits eine Ansteuerschaltung zum Erzeugen eines konstanten Stromes durch zumindest eine Leuchtdiode bekannt. Die Ansteuerschaltung beinhaltet eine Schaltungsanordnung zum Erzeugen einer von einer vorgegebenen Versorgungsspannung abweichenden Spannung, die an die zu betreibenden Leuchtdioden angelegt wird. Ein durch die Leuchtdioden fließender Strom wird von einer Stromerfassung erfasst. Die am Ausgang der Schaltungsanordnung anliegende Spannung wird dabei in Abhängigkeit von der Höhe des Stromes gewählt, der durch die Leuchtdioden fließt.

Aus der DE 10 2005 012 662 A1 ist eine Anordnung mit Spannungskonverter zur Spannungsversorgung einer elektrischen Last bekannt, die eine Stromsenke aufweist. Die Auswahllogik ermittelt einen neuen Multiplikationsfaktor aus den Ergebnissen des Vergleichs der gemessenen Stromsenkenspannung mit einem unteren und mit einem oberen Schwellwert. Das Ergebnis dieser Ermittlung wird an einen Spannungskonverter gegeben.

Aus der US 6,943,504 B1 ist eine Anordnung zur Kontrolle eines Ausgangsstroms bekannt.

Aus der US 2003/0227265 A1 ist ein Steuerkreis für zumindest ein LED Strang bekannt.

### Offenbarung der Erfindung

### Vorteile der Erfindung

Die erfindungsgemäße Ansteuereinrichtung mit den Merkmalen des Anspruchs 1 hat demgegenüber den Vorteil, dass einerseits eine hohe Betriebssicherheit erreicht wird, während andererseits eine Verlustleistung minimiert wird. Diese Vor30 teile werden dadurch erreicht, dass nicht nur die Betriebsspannung der Leuchtdioden geregelt wird, sondern dass auch der Strom geregelt wird, der durch die Leuchtdioden fließt. Durch die Stromregelung ist es zunächst einmal möglich, eine Zerstörung der Leuchtdioden durch einen zu hohen Stromfluss zu verhindern. Steigt die Spannung unvorhergesehen stark an oder kommt es zu Spannungs schwankungen bzw. zu Störungen in der Spannungserzeugung anderer Art, kann durch die Stromregelung unmittelbar und zeitnah der Strom, der durch die Leuchtdioden getrieben wird, begrenzt werden, um eine Zerstörung der Leuchtdioden durch zu hohen Stromfluss zu verhindern. Durch die Stromregelung ist es zudem möglich, die Spannung permanent anzupassen bis genau der erforderliche Strom durch die Reihenschaltung der Leuchtdioden fließen kann. Dieses führt zu einem Betriebspunkt nahe der minimal möglichen Verlustleistung. Weiterhin müssen die Fertigungstoleranzen der Leuchtdioden bei der Produktion der Gesamtbeleuchtungseinrichtung nicht bzw. weniger aufwendig abgeglichen werden, so dass sich die Fertigung solcher Einrichtungen vereinfacht.

Neben diesen Vorteilen, die sich bereits dann ergeben, wenn eine Reihenschaltung von Leuchtdioden an die erfindungsgemäße Ansteuereinrichtung angeschlossen wird, ergeben sich die folgenden Vorteile dann, wenn mehrere Reihenschaltungen von Leuchtdioden parallel an die Ansteuerungseinrichtung gemäß dem Anspruch 1 angeschlossen werden. Durch herstellungsbedingte Toleranzen weisen Leuchtdioden leicht unterschiedliche Kennlinien auf, so dass sich bei einer bestimmten, angelegten Spannung abhängig von den Kennlinien der verwendeten Leuchtdioden unterschiedliche Stromflüsse ergeben. Bei mehreren Reihenschaltungen von Leuchtdioden können sich diese Fehler unter ungünstigen Umständen jeweils addieren, so dass beispielsweise bei zwei ungünstig miteinander parallel geschalteten Ketten eine der beiden Ketten noch nicht leuchtet, während die andere durch zu hohen Stromfluss bereits zerstört wird. Durch eine Stromregelungseinheit, die erfindungsgemäß jeder der Reihenschaltungen zugewiesen ist, kann der Stromfluss durch die Reihenschaltungen jeweils begrenzt werden, so dass eine Zerstörung einer Reihenschaltung von Leuchtdioden verhindert wird. Zugleich kann die Betriebsspannung aber so weit angehoben werden, dass alle an die erfindungsgemäße Ansteuereinrichtung angeschlossenen Leuchtdiodenketten eine derartige Betriebsspannung erhalten, dass ein für die Lichterzeugung hinreichender Strom durch die Leuchtdioden getrieben werden kann. Somit ist es einerseits möglich, bei mehreren an die Ansteuereinrichtung parallel angeschlossenen Reihenschaltungen von Leuchtdioden alle Leuchtdioden zum Leuchten zu bringen, während andererseits keine der Reihenschaltungen durch zu hohen Stromfluss zerstört werden kann. Indem ein Stromregelsignal von der Stromregelungseinheit zu der Spannungsregelungseinheit geführt wird, kann durch diese Rückkopplung die Stromregelung mit der Spannungsregelung auf einfach zu realisierende Weise verknüpft werden, um sicherzustellen, dass der notwendige Strom durch alle Reihenschaltungen von Leuchtdioden getrieben wird. Durch die Regelung des Stroms auf den notwendigen Wert werden die Reihenschaltungen von Leuchtdioden in einem gewünschten Betriebspunkt betrieben. Hierdurch werden die optischen Parameter der Leuchtdioden stabilisiert. Weiterhin wird durch eine geeignet schnelle Regelung des Stroms sicher die Zerstörung der Leuchtdioden vermieden. Durch die Regelung der Vorsorgungsspannung auf den gerade notwendigen Wert kann zudem auch die Verlustleistung sowohl der Stromregeleinrichtung, als auch der Spannungserzeugung vermindert werden.

Das erfindungsgemäße Verfahren mit den Merkmalen des nebengeordneten Verfahrensanspruchs zum Betrieb wenigstens einer Reihenschaltung von Leuchtdioden ermöglicht entsprechende Vorteile.

Durch die in den abhängigen Ansprüchen aufgeführten Maßnahmen sind vorteilhafte Weiterbildungen und Verbesserungen der in den unabhängigen Ansprüchen angegebenen Ansteuerungseinrichtung und des angegebenen Verfahrens möglich. So ist es vorteilhaft, die Stromregelungssignale aller Reihenschaltungen der Leuchtdioden auf einen Eingang der Spannungsregelungseinheit zu legen. Hierdurch ist es auf einfach Weise möglich, durch die Überwachung nur eines Eingangs der Spannungsregelungseinheit durch die Berücksichtigung des Stromregelsignals, das der Reihenschaltung von Leuchtdioden zugeordnet ist, die die höchste Betriebsspannung erfordert, alle Reihenschaltungen durch die Wahl der höchsten, notwendigen Betriebsspannung zum Leuchten zu bringen. Andererseits muss die Betriebsspannung nicht beliebig hoch gewählt werden, sondern kann an genau diejenige Reihenschaltung angepasst werden, die die höchste Betriebsspannung erfordert. Somit können mit einer Ansteuereinrichtung mehrere Reihenschaltungen von Leuchtdioden energiesparend und zuverlässig betrieben werden.

Es ist weiterhin vorteilhaft, dass die Spannungsregelungseinheit einen Hochsetzsteller aufweist, so dass die Betriebsspannung der Leuchtdioden größer als eine Versorgungs-Eingangsspannung gewählt werden kann. Dadurch ist es möglich, auch derart große Reihenschaltungen von Leuchtdioden vorzusehen, die eine Betriebsspannung erfordern, die höher ist, als eine Versorgungsspannung, die zum Betrieb der Ansteuerungseinrichtung zur Verfügung steht.

Eine besonders bequem zu realisierende Regelung ergibt sich bei einer Ausgestaltung der Spannungsregelungseinheit mit zwei Regelstufen, bei der eine durch einen Spannungsteiler vorgegebene Spannung in Abhängigkeit von dem Stromregelsignal verzogen wird, wenn das Stromregelsignal groß ist und der Strom durch die Reihenschaltung von Leuchtdioden klein ist. Die Regelstufe zum Verziehen des Potentials in der Mitte des Spannungsteilers ist dabei bevorzugt so ausgestaltet, dass sie zumindest in einem Teil ihrer Kennlinie eine Änderung der Betriebsspannung der wenigstens einen Reihenschaltung von Leuchtdioden ermöglicht, die proportional zu der Größe des Stromregelsignals ist. Für diese Regelung weist die zweite Regelstufe insbesondere einen Feldeffekt-Transistor mit Linearisierungswiderstand auf, der sich hierdurch verstärkt linear verhält und weiterhin das Stromregelsignal nicht stört. Eine andere Umsetzung des Stromregelsignals ist möglich solange hierdurch nicht die Funktion des Stromregelkreises gestört wird.

Ferner ist es vorteilhaft, zur Regelung des Stroms einen Transistor vorzusehen, beispielsweise einen Bipolar- oder Feldeffekttransistor, wobei das Stromregelsignal auf die Basis des Transistors gegeben wird und es somit zu einer Stromregelung in Abhängigkeit von dem Betrag der Spannung des Stromregelsignals kommt. Um die Stromregelung dabei sicher einzustellen, ist bevorzugt eine Vergleicherschaltung zum Vergleichen eines Stromsignals mit einer Referenzspannung vorgesehen.

Besonders vorteilhaft ist die Verwendung einer erfindungsgemäßen Anzeigeeinrichtung in einem Kraftfahrzeug, bei dem insbesondere zur Beleuchtung von Zeigeranzeigen, Flüssigkristallanzeigen, aber auch von Fahrzeug-Innenraumeinrichtungen Leuchtdioden mitunter auch in großer Zahl verwendet werden. Durch die niedrige Betriebsspannung, eine nahezu beliebige Farbauswahl und eine niedrige Erwärmung im Betrieb kann eine Leuchtdiode an verschiedenen Stellen im Fahrzeug zur sicheren Beleuchtung verwendet werden.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: ein erstes Ausführungsbeispiel einer erfindungsgemäßen Ansteuereinrichtung,
- Figur 2: ein weiteres Ausführungsbeispiel einer erfindungsgemäßen Ansteuereinrichtung,
- Figur 3: ein erfindungsgemäßes Ausführungsbeispiel einer Stromregelungseinheit,
- Figur 4: ein erfindungsgemäßes Ausführungsbeispiel einer Spannungsregelungseinheit.

### Ausführungsformen der Erfindung

Die erfindungsgemäße Ansteuereinrichtung für den Betrieb einer Reihenschaltung von Leuchtdioden oder im zeitgleichen, parallelen Betrieb mehrerer Reihenschaltungen von Leuchtdioden kann für beliebige Beleuchtungszwecke verwendet werden. Insbesondere ist die Verwendung in einem Fahrzeug von Vorteil, da die erfindungsgemäße Ansteuereinrichtung einen sicheren und zugleich sparsamen Betrieb ermöglicht. Insbesondere für die Beleuchtung von Messdaten im Fahrzeug ist es erforderlich, dass eine Funktion der Ansteuereinrichtung stets gewährleistet ist, damit ein Fahrer entsprechende Messdaten ablesen kann. Die erfindungsgemäße Ansteuereinrichtung kann hierzu beispielsweise in ein so genannten Kombinationsinstrument vor dem Fahrer eingebracht sein, in dem eine Vielzahl von Anzeigeeinrichtungen wie z.B. eine Zeigeranzeige oder eine Flüssigkristallanzeige eingebracht sind. Eine Spannungsversorgung erfolgt dabei über das Bordnetz des Fahrzeugs mit einer Versorgungsspannung zwischen beispielsweise 10 bis 12 V. Damit eine Leuchtdiode entsprechend Licht aussenden kann, ist es erforderlich, dass von der angelegten Spannung der Bandabstand des verwendeten Halbleitermaterials überschritten wird. Der Bandabstand entspricht dabei der Energie der ausgesendeten Lichtteilchen. Damit ergeben sich insgesamt erforderliche Betriebsspannungen pro Leuchtdiode zwischen 1,2 V und 4 V. Somit könnten mit der Bordspannung eines Fahrzeugs nur eine begrenzte Anzahl von Leuchtdioden in einer Reihenschaltung sicher betrieben werden. Im Folgenden wird daher die Erfindung für Ausführungsbeispiele erläutert, bei der auch eine höhere Anzahl von Leuchtdioden in eine Reihe geschaltet werden. Die hierfür erforderliche Spannung, die größer als die zur Verfügung stehende Bordspannung ist, wird mit einer entsprechenden Spannungserzeugungseinheit bereitgestellt. Die vorliegende Erfindung kann aber auch für kleinere Anordnungen verwendet werden, bei denen niedrigere Spannungen benötigt werden und bei denen die Spannungserzeugungseinheit die notwendige Betriebsspannung nicht heraufsetzen muss. Andererseits ist es auch insbesondere für Anwendungen außerhalb des Fahrzeugs möglich, die erfindungsgemäße Ansteuerungseinrichtung an das Stromnetz anzuschließen und durch die Spannungserzeugungseinheit aus der Netzspannung eine Betriebs-Gleichspannung in gewünschter Höhe zu erzeugen. Die vorliegende Erfindung ist im Folgenden am Beispiel eines Betriebs einer Reihenschaltung von Leuchtdioden erläutert, bei der eine Betriebs-Gleichspannung für den Betrieb der Leuchtdioden hochgesetzt wird.

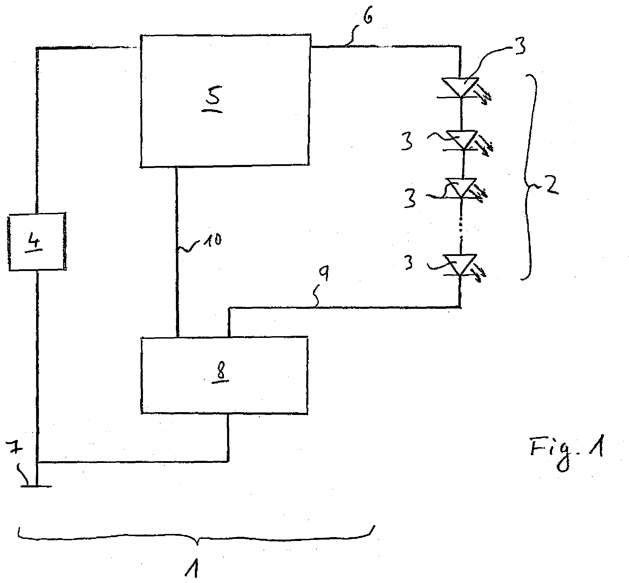

In der Figur 1 ist ein erstes Ausführungsbeispiel einer erfindungsgemäßen Ansteuerungseinrichtung 1 gezeigt. An die Ansteuerungseinrichtung 1 ist eine Reihenschaltung 2 von Leuchtdioden 3 angeschlossen, wobei die Leuchtdioden 3 in einer entsprechenden Anzahl in Durchlassrichtung in Reihe geschaltet sind. Für den Betrieb der Schaltung ist eine Spannungsversorgung 4 vorgesehen, die eine Versorgungsspannung bereitstellt. In einem Fahrzeug kann dies beispielsweise das Bordnetz, bzw. der Fahrzeug-Akkumulator sein. Die Versorgungsspannung wird an eine Spannungsregelungseinheit 5 geführt, die eine Betriebsspannung für einen Betrieb der Reihenschaltung 2 der Leuchtdioden 3 ausgibt. Diese Betriebsspannung wird an einen Ausgang 6 der Spannungsregelungseinheit 5 gegenüber Masse 7 angelegt. Die Reihenschaltung 2 ist in Durchlassrichtung betrieben und im Ausgang 6 der Spannungsregelungseinheit 5 mit einem Eingang 9 einer Stromregelungseinheit 8 verbunden. Die Stromregelungseinheit 8 ist wiederum mit Masse verbunden, so dass von dem Ausgang 6 der Spannungsregelungseinheit 5 durch die Reihenschaltung 2 über die Stromregelungseinheit 8 bis zur Masse ein Strom durch die Reihenschaltung 2 der Leuchtdioden 3 getrieben wird. Durch die Reihenschaltung addieren sich die Spannungsabfälle an den einzelnen Leuchtdioden auf, so dass zur Lichterzeugung, beispielsweise von zehn Leuchtdioden mit einer erforderlichen Spannung von 3,2 V, eine Gesamtspannung von 32 V anliegen muss, um einen ausreichenden Strom durch die Leuchtdioden 3 zu treiben. Zudem wird in der Stromregelungseinheit 8 typischerweise ein zusätzlicher Spannungsabfall stattfinden.

Für einen Leuchtbetrieb ist beispielsweise ein Strom von 100 mA erforderlich. Solange die Stromregelungseinheit 8 diesen Strom von ihrem Eingang 9 zur Masse 7 nicht misst, wird eine Stromregelung der Stromregelungseinheit 8 über ein Stromregelsignal auf Durchlass von dem Eingang 9 zur Masse 7 geschaltet. Dieses Stromregelungssignal wird über eine Verbindung 10 auch an die Spannungsregelungseinheit 5 weitergeleitet. Wird das entsprechende Stromregelsignal, das einer Schaltung des Stromreglers auf Durchlass entspricht, von der Spannungsregelungseinheit 5 empfangen, so wird die Ausgangsspannung erhöht, die an dem Ausgang 6 der Spannungsregelungseinheit 5 anliegt. Beginnt ein Strom durch die Leuchtdioden 3 und damit auch durch die Stromregelungseinheit 8 zu fließen, so wird das Stromregelungssignal abgesenkt, so dass der Stromfluss durch die Leuchtdioden 2 nicht verhindert wird, aber das Stromregelsignal eine niedrigere Spannung aufweist. Das niedrigere Stromregelsignal wird an die Spannungsregelungseinheit 5 geleitet, so dass die Betriebsspannung, die an den Ausgang 6 ausgegeben wird, konstant gehalten und nicht weiter erhöht wird. Steigt der Strom aus anderen Gründen weiter an, beispielsweise durch Erwärmung im Betrieb, so kann die Stromregelungseinheit 8 durch ein entsprechendes Absenken des Stromregelungssignals den Strom begrenzen.

Steigt die benötigte Spannung der Leuchtdioden 3 aus anderen Gründen weiter an, beispielsweise durch eine Temperaturänderung während des Betriebs, so kann die Spannungsregelungseinheit 5 durch ein entsprechendes Anpassen der an dem Ausgang 6 anliegenden Spannung einerseits die Verlustleistung im der Stromregeleinheit minimieren und andererseits einen zur Lichterzeugung führenden Stromfluss durch die Leuchtdioden ermöglichen. Das Stromregelsignal kann hierbei zu einem Absenken der Betriebsspannung beitragen, indem es mit entsprechender Spannung weiterhin an die Spannungsregelungseinheit 5 übertragen wird.

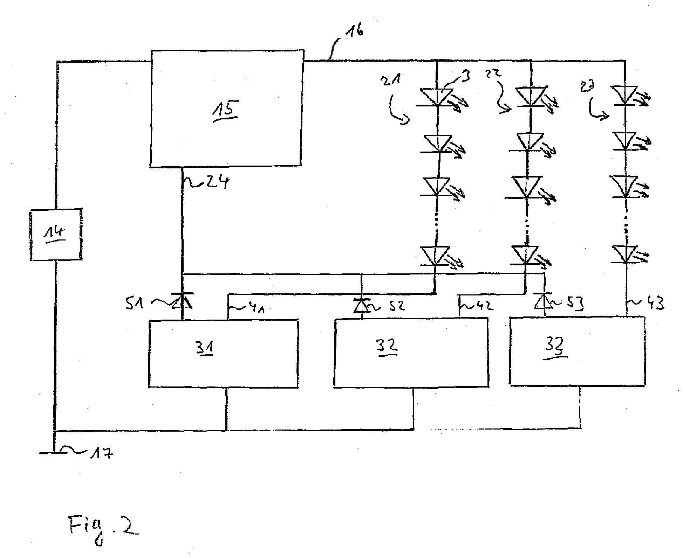

In der Figur 2 ist eine weitere Ausführungsform der Erfindung dargestellt, bei der die Ansteuerungseinheit erweitert ist und mehrere Reihenschaltungen von Leuchtdioden an eine Spannungsregelungseinheit 15 angeschlossen sind. Die Spannungsregelungseinheit 15 wird von einer Spannungsquelle 14 mit einer Versorgungsspannung versorgt. Eine erste Reihenschaltung 21, eine zweite Reihenschaltung 22 und eine dritte Reihenschaltung 23 von Leuchtdioden 3 sind parallel an einen Ausgang 16 der Spannungsregelungseinheit 15 angeschlossen. Der ersten Reihenschaltung 21 ist eine erste Stromregelungseinheit 31, der zweiten Reihenschaltung 22 eine zweite Stromregelungseinheit 32 und der dritten Reihenschaltung 23 eine dritte Stromregelungseinheit 33 zugeordnet. Die Reihenschaltungen 21, 22, 23 sind jeweils mit einem Eingang 41, 42, 43 der jeweiligen Stromregeleinrichtung verbunden und über die jeweilige Stromregelungseinheit 31, 32, 33 mit Masse 17 verbunden. Ein Stromregelsignal wird von den Stromregelungseinheiten 31,32, 33 jeweils über eine Diode 51, 52, 53 auf einen Eingang 24 der Spannungsregelungseinheit 15 gegeben. Die Dioden 51, 52, 53 sind dafür vorgesehen, dass die Stromregelsignale von den Stromregelungseinheiten 31, 32, 33 zwar zu der Spannungsregelungseinheit 15 gelangen, nicht jedoch in die anderen Stromregelungseinrichtungen zurückfließen können. Eine entsprechende Diode kann gemäß der Figur 1 aber auch in die Stromregelungseinrichtung oder in den Eingang der Spannungsregelungseinheit 5 eingebracht sein. Anstelle der Diode kann auch eine andere Entkopplung der Signale vorgenommen werden. Entsprechend können auch mehrere Leitungen von den Stromregelungseinheiten 31, 32, 33 zu der Spannungsregelungseinheit 15 geführt werden, wobei ein entsprechender Eingang, bevorzugt durch eine Diode, geschützt wird.

Die Funktionsweise der Schaltung gemäß der Figur 2 entspricht zunächst dem Aufbau gemäß der Figur 1. Bevorzugt sind dabei die Leuchtdioden in ähnlicher Anzahl und in ähnlichen Spannungsverhältnissen in den verschiedenen Reihen parallel geschaltet. Die Spannungsregelungseinheit 15 beginnt mit einem Spannungsstartwert, der im Allgemeinen noch nicht für einen Betrieb einer der Reihenschaltungen von Leuchtdioden ausreicht. Durch die entsprechenden Stromregelsignale erhält die Spannungsregelungseinheit 15 die Information, dass durch wenigstens eine der Reihenschaltungen noch kein Strom fließt. Die Spannung wird im Folgenden erhöht, bis durch die erste Reihenschaltung ein Strom getrieben wird. Durch die anderen Reihenschaltungen wird zu diesem Zeitpunkt noch kein Strom getrieben, so dass entsprechend große Stromregelsignale weiterhin zu der Spannungsregelungseinheit 15 geleitet werden, bis nur noch durch eine der Reihenschaltungen kein Strom getrieben wird. Auch in diesem Fall wird die Betriebsspannung weiter erhöht, bis auch durch diese Reihenschaltung ein entsprechender, vorgegebener Strom fließt. Zu diesem Zeitpunkt könnte bereits durch die erste Reihenschaltung, durch die ein Strom geflossen ist, ein derartig hoher Strom fließen, dass ohne eine Strombegrenzung diese Reihenschaltung oder zumindest eine der Leuchtdioden dieser Reihenschaltung zerstört werden könnte. Durch die zugehörige Stromregelung wird aber der durch die Reihenschaltung fließende Strom begrenzt.

In einer Reichenschaltung können baugleiche, insbesondere farbgleiche Leuchtdioden verwendet werden. Gegebenenfalls können in einer Reihenschaltung auch unterschiedliche Leuchtdioden verwendet werden. Entsprechend gilt dies auch bei mehreren parallel geschalteten Reihen, die sich gegebenenfalls unter Ausnutzung des erfindungsgemäßen Betriebs auch in der Anzahl der in einer Reihenschaltung vorgesehenen Leuchtdioden unterscheiden können.

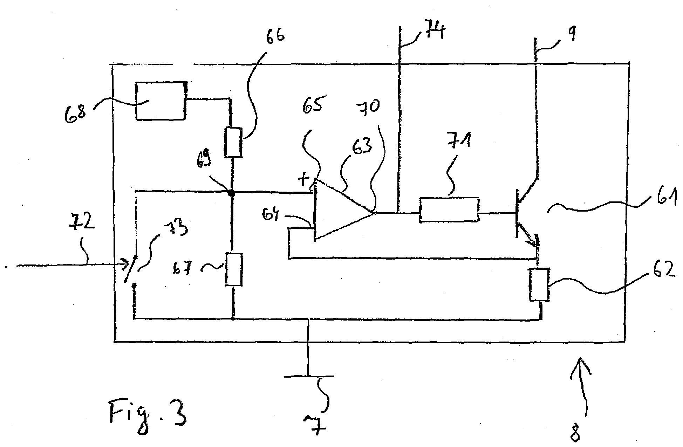

In der Figur 3 ist ein Ausführungsbeispiel für eine Stromregelungseinheit, wie beispielsweise die Stromregelungseinheit 8, dargestellt. Entsprechend sind auch die Stromregelungseinheiten 31, 32 und 33 aufgebaut. Über einen Eingang 9 ist die Reihenschaltung der Leuchtdioden mit der Stromregelungseinheit 8 verbunden. Dieser Eingang wird auf einen Transistor 61 gegeben. Der Kollektor des Transistors ist über einen Widerstand 62 mit Masse 7 verbunden. Zwischen dem Widerstand 62 und dem Kollektor des Transistors 61 wird die Spannung abgegriffen und in einen Eingang 64 eines Operationsverstärkers 63 geführt. Der andere Eingang 65 des Operationsverstärkers 63 ist mit dem mittleren Abgriff 69 eines Spannungsteilers verbunden. Der Spannungsteiler wird dabei aus einem ersten Widerstand 66 und einem zweiten Widerstand 67 gebildet. Durch die beiden Widerstände 66, 67 wird eine Spannung getrieben, die von einer Spannungsquelle 68 erzeugt wird. Durch das Verhältnis der Widerstände 66, 67 ist damit die Spannung an dem Abgriff 69 des Spannungsteilers vorgebbar. Diese Spannung wird an einen Eingang des Operationsverstärkers 63 geführt. Diese Spannung bildet die Referenzspannung, die von dem Operationsverstärker 63 mit der Spannung verglichen wird, die zwischen dem Kollektor des Transistors 61 und dem Widerstand 62 abgegriffen wird. Die Referenzspannung kann auch durch andere Schaltungen beispielsweise unter einer Verwendung von Zenerdioden oder auch durch ein Anlegen einer von einer anderen Signalquelle ausgegebenen Spannung, z.B. von einer Audiosignalquelle, insbesondere von Audiosignalen, erzeugt werden. Der Ausgang 70 des Operationsverstärkers ist über einen Widerstand 71 mit der Basis des Transistors 61 verbunden. Durch die Funktionsweise des Operationsverstärkers 63, eine Spannungsdifferenz zwischen den beiden Eingängen 64, 65 im Rahmen der für den Operationsverstärkers 63 zur Verfügung stehenden Ausgangsspannung quasi "unendlich" zu verstärken, regelt der Operationsverstärker die Ausgangsspannung so, dass an dem Eingang 64 und damit zwischen dem Transistor 61 und dem Widerstand 62 die vorgegebene Referenzspannung abfällt. Durch eine entsprechende Wahl des Widerstands 62 und auch durch eine entsprechende Wahl der Referenzspannung an dem Abgriff 69 mittels der Widerstände 66 und 67 in Verbindung mit der Spannungsquelle 68 lässt sich damit auch der Strom vorgeben, der durch den Widerstand 62 fließen soll. Wird der Strom höher, so regelt der Operationsverstärker 63 über die Basisansteuerung den Stromfluss durch den Transistor 61 ab. Ist der Strom zu niedrig, so wird der Transistor 61 über die Basis aufgeregelt.

Über einen weiteren Eingang 72 der Stromregelungseinheit ist es ferner möglich, über einen Kurzschluss des zweiten Widerstandes 67 des Spannungsteilers den zweiten Eingang 65 des Operationsverstärkers auf Masse zu legen. Damit wird der gewünschte Stromfluss durch den Widerstand 62 auf Null geregelt, so dass der Operationsverstärker den Ausgang 70 auf Null regelt und den Transistor 61 sperrt. Hierzu wird über den Eingang 72 ein Schaltelement 73 angesteuert. Neben einer reinen An-/Ausregelung ist es über den Eingang 72 auch möglich, beispielsweise durch ein pulsweitenmoduliertes Rechtecksignal, den Strom durch den Widerstand 62 und damit auch den Strom durch die Reihenschaltung der Leuchtdioden zu regeln und die Leuchtdioden damit zu dimmen. Für den Fall, dass kein Strom fließt, gibt der Operationsverstärker 63 seine maximale Ausgangsspannung, die ungefähr der Versorgungsspannung entspricht, an seinem Ausgang 70 aus.

Das Stromregelungssignal wird zudem zwischen dem Operationsverstärker 63 und dem Transistor 61 abgegriffen, wobei bevorzugt zwischen dem Operationsverstärker 63 und dem Transistor 61 ein Widerstand 71 angeordnet ist und der Abgriff zwischen dem Widerstand 71 und dem Operationsverstärker 63 erfolgt. Das Stromregelungssignal wird über einen Ausgang 74 an die Spannungsregelungseinheit 5 weitergeleitet. Der Widerstand 71 hat beispielsweise einen Wert von 400 Ω. Der Widerstand 71 stellt dabei auch sicher, dass ein Regelungssignal mit einer für eine weitere Verarbeitung hinreichend hohen Spannung an den Ausgang 74 gegeben werden kann. Für den Transistor 61 kann ein herkömmlicher Transistor, aber auch ein Feldeffekttransistor verwendet werden. Die Dimension des Widerstands 71 ist dabei an den verwendeten Transistor anzupassen. Bei einem Feldeffekttransistor kann auf einen Widerstand 71 auch ganz verzichtet werden. Der Widerstand 62 ist möglichst klein zu wählen, um den Stromfluss durch die Reihenschaltung der Leuchtdioden nicht unnötig zu behindern. Ein typischer Wert könnte hierbei bei etwa 6 Ω liegen.

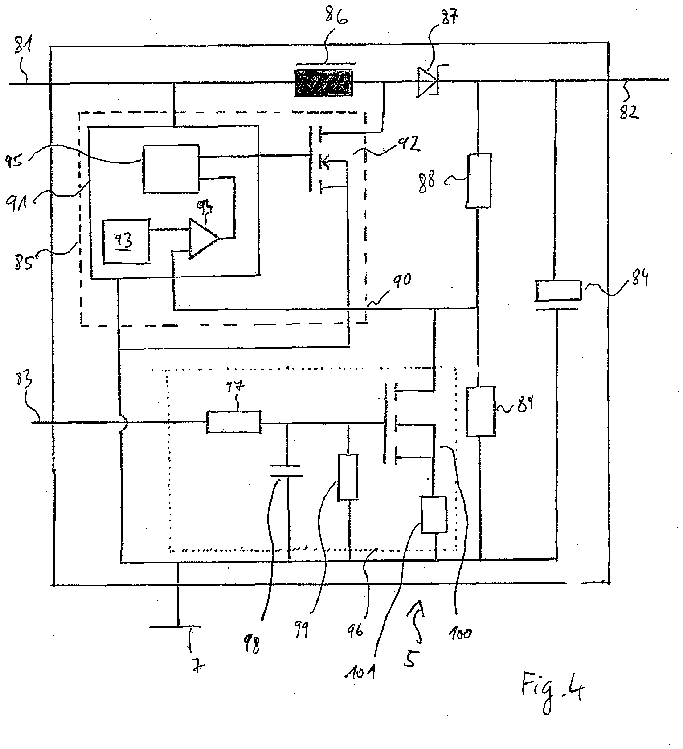

In der Figur 4 ist ein Ausführungsbeispiel für eine erfindungsgemäße Spannungsregelungseinheit 5 dargestellt. Die Spannungsregelungseinheit 5 verfügt über einen ersten Eingang 81, über den ihr eine Versorgungsspannung zugeführt wird. Ferner verfügt sie über einen Ausgang 82, über den die Betriebsspannung für die wenigstens eine Reihenschaltung von Leuchtdioden aus der Spannungsregelungseinheit 5 herausgeführt wird. Über einen zweiten Eingang 83 wird das Stromregelsignal der Spannungsregelungseinheit 5 zugeführt. Ferner ist die Spannungsregelungseinheit 5 über einen ersten Anschluss mit Masse 7 verbunden. Die Spannungsregelungseinheit 5 weist einen Kondensator 84 auf, der auf die Betriebsspannung zum Betrieb der wenigstens einen Reihenschaltung von Leuchtdioden aufgeladen wird. Über eine erste Regelstufe 85, die in der Figur 4 gestrichelt umrandet dargestellt ist, wird ein Stromfluss von dem Eingang 81 über eine Spule 86 regelmäßig auf Masse geschaltet. Der Spannungswechsel induziert Spannungsspitzen, die über die Diode 87, die beispielsweise al eine Schottky-Diode ausgeführt ist, auf den Ausgang 82 und damit auch auf den Kondensator 84 gegeben wird, so dass sich der Kondensator auf eine Spannung aufladen kann, die weit über der Versorgungsspannung liegt, die auf den Eingang 81 gegeben wird. Die erste Regelstufe erhält dabei als Referenzspannung ein Signal, das von einem Spannungsteiler zwischen einem ersten Widerstand 88 und einem zweiten Widerstand 89 abgegriffen wird, wobei die beiden Widerstände 88, 89 parallel zu dem Ladekondensator 84 geschaltet sind. Die Betriebsspannung liegt also an dem Spannungsteiler der beiden Widerstände 88, 89 an. Die an dem Spannungsteiler abgegriffene Zwischenspannung wird an einen Eingang 90 der ersten Regelstufe 85 geführt. Die erste Regelstufe 85 weist eine Steuerschaltung 91 und einen Leistungsschalter auf, der in dem hier dargestellten Ausführungsbeispiel als ein Feldeffekttransistor 92 ausgeführt ist. Die Steuerschaltung 91 verfügt über eine Referenzspannungsquelle 93, wobei das durch diese bereitgestellte Referenzspannungssignal und das über den Eingang 90 empfangene Signal auf einen Operationsverstärker 94 gegeben werden. Das Ausgangssignal des Operationsverstärkers 94 steuert eine Pulsweitenmodulationsschaltung 95 an und beeinflusst damit die Pulsweite und/oder die Frequenz, mit der das Gate des Feldeffekttransistors 92 angesteuert wird. Der Source-Anschluss des Feldeffekttransistors ist zwischen der Spule 86 und der Schottkydiode 87 angeschlossen, während der Drain-Anschluss direkt oder aber indirekt über weitere Bauelemente wie z.B. Messwiderständen mit Masse verbunden ist. Steigt nun die Spannung an dem Ausgang 82 an, unterbleibt ein weiteres Schalten des Feldeffekttransistors 92, so dass sich der Kondensator 84 nicht weiter aufladen kann. Wird der Kondensator 84 über einen Stromfluss entladen, beispielsweise über die Leuchtdioden, erfolgt wieder eine Aufladung über ein Ansteuern des Feldeffekttransistors 92 entsprechend der erläuterten Steuerung.

Ferner ist eine zweite Regelstufe 96 vorgesehen, die in der Figur 4 durch eine gepunktete Linie umrandet dargestellt ist. Die zweite Regelstufe 96 dient dazu, in Abhängigkeit von dem über den zweiten Eingang 83 empfangenen Stromregelsignals das Potential, das an dem Eingang 90 der ersten Regelstufe anlegt, gegebenenfalls abzusenken. In einer Ausführungsform wird in der zweiten Regelstufe das Stromregelungssignal zunächst auf einen Tiefpass gegeben, bestehend aus einem ersten Widerstand 97 und einem Kondensator 98. Der Tiefpass dient dazu, eventuelle Pulse, mit denen das Stromregelungssignal überlagert ist, zu glätten. Das Stromregelungssignal wird, gegebenenfalls nach Integration über den Tiefpass 97, 98 auf das Gate eines Feldeffekttransistors 100 gegeben. Der Source-Anschluss des Feldeffekttransistors 100 ist mit dem Eingang 90 der ersten Regelstufe 85 verbunden. Der Drain-Anschluss des Feldeffekttransistors 100 ist entweder unmittelbar oder in einer anderen Ausführungsform über einen ohmschen Widerstand 101 mit Masse 7 verbunden. Der Widerstand 101 bewirkt eine Linearisierung der quadratischen Kennlinie des Feldeffekttransistors 100 und stellt gleichzeitig eine maximale Ausgangsspannung ein, die an dem Ausgang 82 anliegt. Anstelle des Feldeffekttransistors 100 ist auch ein anderer analoger Schalter wie z.B. ein Bipolar-Transistor denkbar. Überschreitet das Stromregelsignal, gegebenenfalls durch die integrierende Wirkung des eingehenden Tiefpasses geglättet, das Ansteuerungs-Spannungsniveau des Feldeffekttransistors 100, so kommt es zum Stromfluss über den Feldeffekttransistor 100, so dass der Innenwiderstand des Feldeffekttransistors und gegebenenfalls in Reihe damit der Widerstand 101 parallel zu dem Widerstand 89 des Spannungsteilers geschaltet wird. Im unteren Teil des Spannungsteilers sinkt damit der ohmsche Widerstand ab, so dass sich das Spannungsteilerverhältnis verschiebt. Damit sinkt das elektrische Potential an dem Eingang 90 der ersten Regelstufe ab. Um Aufladungseffekte des Feldeffekttransistors bzw. des Kondensators 98 zu vermeiden, ist der Kondensator 98 des Tiefpasses parallel zu einem weiteren ohmschen Widerstand 99 geschaltet, so dass der Kondensator 98 sich mit der Zeit entlädt.

Wird die Spannungsregelungseinrichtung eingeschaltet, so steht zu Beginn lediglich die Versorgungsspannung, die über den Eingang 81 zugeführt wird, zur Verfügung. Die hierbei durch den Spannungsteiler 88, 89 noch verbleibende Spannung liegt an dem Eingang 90 der ersten Regelstufe 85 an. Diese Spannung ist niedriger als die Referenzspannung, die von der Referenzspannungsquelle 93 vorgegeben wird, so dass der Feldeffekttransistor 92 über ein ausgegebenes Pulssignal angesteuert wird, so dass sich der Kondensator 84 auflädt und die Ausgangsspannung an dem Ausgang 82 erhöht. Ist nun an dem Eingang 90 durch diese Spannungserhöhung die Zielspannung, die durch die Referenzspannungsquelle 93 vorgegeben ist, erreicht, würde zunächst durch die erste Regelstufe keine weitere Spannungserhöhung stattfinden. Die Referenzspannungsquelle 93 ist dabei bevorzugt so eingestellt, dass entweder hierbei noch gar keine vorgesehene Reihenschaltung von Leuchtdioden betrieben werden könnte oder zumindest nur in einem sehr günstigen Fall, also dass die Spannungen bei allen Leuchtdioden, die erforderlich sind, sehr niedrig sind, gerade zu einem Betrieb ausreichen würden.

Für den Fall, dass die hierdurch ausgegebene Spannung an dem Ausgang 82 noch nicht zum Betrieb der Reihenschaltung von Leuchtdioden bzw. bei mehreren Leuchtdioden zumindest noch nicht zum Betrieb aller Einschaltungen von Leuchtdioden ausreichen würde, so wird über den zweiten Eingang 83 zumindest ein Stromregelsignal von wenigstens einer der Stromregelungseinrichtungen ausgegeben, dass über einer vorgegebenen Schwelle liegt. Durch das Regelungssignal wird der Feldeffekttransistor 100, gegebenenfalls auch in einem Bereich eines linearen Kennlinienverlaufs, aufgesteuert. Hierdurch sinkt, wie oben erläutert, das Potential an dem Eingang 90 der ersten Regelstufe 85 ab. Da hier aber das Potential absinkt, ändert sich auch bei dem Operationsverstärker 94 die zugeführte Spannung, so dass die Referenzspannung 93 nicht mehr erreicht wird. Damit wird aber die Pulsweiten-Modulationsschaltung 95 angesteuert und damit der Feldeffekttransistor 92 an seinem Gate mit einem Pulssignal beaufschlagt, so dass die Betriebsspannung weiter erhöht wird. Erst wenn von keiner der angeschlossenen Stromregelungseinheiten mehr ein Stromregelsignal ausgegeben wird, das oberhalb einer vorgegebenen Schwelle von etwa 3 V liegt, wird der Feldeffekttransistor 100 wieder geschlossen, so dass eine weitere Erhöhung der Spannung durch die erste Regelstufe unterbleibt und die nunmehr vorliegende Spannung zunächst gehalten wird. Für den Fall, dass der Strom wieder absinkt, kann der Feldeffekttransistor 100 wieder durch Ansteigen des Stromregelungssignals angesteuert werden. Der Feldeffekttransistor 100 wird somit im normalen Betrieb dauerhaft mehr oder minder aufgesteuert, befindet sich also immer im linearen, analogen Bereich. Im normalen, eingeschwungenen Betrieb werden sich die benötigten Flussspannungen der LED-Reihenschaltungen nur noch langsam und wenig ändern, so dass über den zweiten Eingang 83 zur Zuführung des Stromregelsignals nur noch sehr kurze bzw. schwache Steuereingriffe stattfinden.

## Patentansprüche

1. Ansteuerungseinrichtung für wenigstens eine Reihenschaltung (2, 21, 22, 23) mehrerer Leuchtdioden (3), mit einer Spannungsregelungseinheit (5, 15) zur Regelung einer Betriebsspannung für die wenigstens eine Reihenschaltung (2, 21, 22, 23) der Leuchtdioden (3), wobei für jede Reihenschaltung (2, 21, 22, 23) von Leuchtdioden (3) eine Stromregelungseinheit (8, 31, 32, 33) zur Regelung des Stroms durch die jeweilige Reihenschaltung der Leuchtdioden mittels eines Stromregelsignals vorgesehen ist und wobei die Stromregelungseinheit (8, 31, 32, 33) mit der Spannungsregelungseinheit (5, 15) zur Übertragung des Stromregelsignals auch an die Spannungsregelungseinheit (5, 15) verbunden ist, wobei das Stromregelungssignal über eine Verbindung (10) an die Spannungsregelungseinheit (5, 15) weitergeleitet wird,
**dadurch gekennzeichnet, dass**
die Spannungsregelungseinheit (5, 15) einen Spannungsteiler (88, 89) aufweist, dass der Spannungsteiler (88, 89) zwischen der von der Spannungsregelungseinheit (5, 15) bereitgestellten Betriebsspannung der wenigstens einen Reihenschaltung von Leuchtdioden und Masse geschaltet ist, dass ein Abgriff des Spannungsteilers (88, 89) mit einem Eingang einer ersten Regelstufe (85) zur Einstellung der Betriebsspannung der wenigstens einen Reihenschaltung von Leuchtdioden verbunden ist, dass eine zweite Regelstufe (96) der Spannungsregelungseinheit (5, 15) mit dem Stromregelsignal beaufschlagt wird und dass der Abgriff des Spannungsteilers und der Eingang der ersten Regelstufe (85) mit einem Ausgang der zweiten Regelstufe (96) derart verbunden sind, dass bei einem Überschreiten einer vorgegebenen Spannung des Stromregelsignals die Spannung an dem Abgriff des Spannungsteilers abgesenkt wird.

2. Ansteuerungseinheit nach einem der vorhergehenden Ansprüche, **dadurch gekennzeichnet, dass** die Stromregelungssignale aller Reihenschaltungen der Leuchtdioden auf einen Eingang (10, 25) der Spannungsregelungseinheit (5, 15) gelegt sind.

3. Ansteuerungseinheit nach einem der vorhergehenden Ansprüche, **dadurch gekennzeichnet, dass** die Spannungsregelungseinheit (5, 15) einen Hochsetzsteller zum Erzeugen einer Betriebsspannung für die wenigstens eine Reihenschaltung der Leuchtdioden aufweist.

4. Ansteuerungseinheit nach einem der vorhergehenden Ansprüche, **dadurch gekennzeichnet, dass** die zweite Regelstufe (96) einen Feldeffekttransistor (100) aufweist, dass das Stromregelungssignal an das Gate des Feldeffekttransistors (100) geführt ist, dass der Drain-Anschluss, vorzugsweise über einen Widerstand, mit Masse verbunden ist und das der Source-Anschluss direkt oder über weite Bauelemente mit dem Abgriff des Spannungsteilers (88, 89) verbunden ist.

5. Ansteuerungseinheit nach einem der vorhergehenden Ansprüche, **dadurch gekennzeichnet, dass** jeweils eine Reihenschaltung von Leuchtdioden mit einem Transistor (61) in Reihe geschaltet ist und dass das Stromregelungssignal zur Regelung des Stromes durch die Reihenschaltung von Leuchtdioden auf die Basis des Transistors (61) geführt ist.

6. Ansteuerungseinheit nach einem der vorhergehenden Ansprüche, **dadurch gekennzeichnet, dass** jeweils eine Reihenschaltung von Leuchtdioden mit einem Widerstand (62) in Reihe geschaltet ist, der an einer Seite mit Masse verbunden ist, wobei zum Erzeugen des Stromregelsignals eine Vergleicherschaltung mit der an dem Widerstand abfallenden Spannung und mit einer Referenzspannung beaufschlagt ist.

7. Anzeigeinstrument in einem Fahrzeug, **dadurch gekennzeichnet, dass** die Anzeigeinrichtung wenigsten eine Reihenschaltung von Leuchtdioden aufweist, die mit einer Ansteuereinrichtung nach einem der vorhergehenden Ansprüche betrieben wird.

8. Verfahren zum Betrieb wenigstens einer Reihenschaltung von Leuchtdioden, wobei eine Betriebsspannung der wenigstens einen Reihenschaltung von Leuchtdioden in Abhängigkeit von einem Stromregelungssignal zur Steuerung des Stromes durch eine der wenigstens einen Reihenschaltung von Leuchtdioden gewählt wird, wobei für jede Reihenschaltung (2, 21, 22, 23) von Leuchtdioden (3) eine Stromregelungseinheit (8, 31, 32, 33) den Stroms durch die jeweilige Reihenschaltung der Leuchtdioden mittels eines Stromregelsignals regelt und wobei die Stromregelungseinheit (8, 31, 32, 33) das Stromregelsignal auch an die Spannungsregelungseinheit (5, 15) überträgt, wobei das Stromregelungssignal über eine Verbindung (10) an die Spannungsregelungseinheit (5,15) weitergeleitet wird,
**dadurch gekennzeichnet, dass**
die Spannungsregelungseinheit (5,15) einen Spannungsteiler (88,89) aufweist, dass der Spannungsteiler (88,89) zwischen der von der Spannungsregelungseinheit (5,15) bereitgestellten Betriebsspannung der wenigstens einen Reihenschaltung von Leuchtdioden und Masse geschaltet ist, dass ein Abgriff des Spannungsteilers (88,89) mit einem Eingang einer ersten Regelstufe (85) zur Einstellung der Betriebsspannung der wenigstens einen Reihenschaltung von Leuchtdioden verbunden ist, dass eine zweite Regelstufe (96) der Spannungsregelungseinheit (5,15) mit dem Stromregelsignal beaufschlagt wird und dass der Abgriff des Spannungsteilers und der Eingang der ersten Regelstufe (85) mit einem Ausgang der zweiten Regelstufe (96) derart verbunden sind, dass bei einem überschreiten einer vorgegebenen Spannung des Stromregelsignals die Spannung an dem Abgriff des Spannungsteilers abgesenkt wird.

9. Verfahren nach Anspruch 8, **dadurch gekennzeichnet, dass** die Betriebsspannung der wenigstens einen Reihenschaltung von Leuchtdioden erhöht wird, bis die Spannung des Stromregelungssignals aller Reihenschaltungen von Leuchtdioden eine vorgegebene Grenze passiert.

## Claims

1. Drive device for at least one series circuit (2, 21, 22, 23) of a plurality of light-emitting diodes (3), comprising a voltage regulation unit (5, 15) for regulating an operating voltage for the at least one series circuit(2, 21, 22, 23) of the light-emitting diodes (3) wherein, for each series circuit (2, 21, 22, 23) of light-emitting diodes (3), provision is made of a current regulation unit (8, 31, 32, 33) for regulating the current through the respective series circuit of the light-emitting diodes by means of a current regulation signal and wherein the current regulation unit (8, 31, 32, 33) is connected to the voltage regulation unit (5, 15) for the purpose of transmitting the current regulation signal to the voltage regulation unit (5, 15) as well, wherein the current regulation signal is forwarded to the voltage regulation unit (5, 15) via a connection (10),
**characterized in that**
the voltage regulation unit (5, 15) has a voltage divider (88, 89), **in that** the voltage divider (88, 89) is connected between the operating voltage of the at least one series circuit of light-emitting diodes, said operating voltage being provided by the voltage regulation unit (5, 15), and earth, **in that** a tap of the voltage divider (88, 89) is connected to an input of a first regulation stage (85) for setting the operating voltage of the at least one series circuit of light-emitting diodes, **in that** the current regulation signal is applied to a second regulation stage (96) of the voltage regulation unit (5, 15), and **in that** the tap of the voltage divider and the input of the first regulation stage (85) are connected to an output of the second regulation stage (96) in such a way that the voltage at the light-emitting diode of the voltage divider is reduced in the event of a predefined voltage of the current regulation signal being exceeded.

2. Drive unit according to any of the preceding claims, **characterized in that** current regulation signals of all series circuits of the light-emitting diodes are applied to an input (10, 25) of the voltage regulation unit (5, 15).

3. Drive unit according to either of the preceding claims, **characterized in that** the voltage regulation unit (5, 15) has a step-up converter for generating an operating voltage for the at least one series circuit of the light-emitting diodes.

4. Drive unit according to any of the preceding claims, **characterized in that** the second regulation stage (96) has a field effect transistor (100), **in that** the current regulation signal is passed to the gate of the field effect transistor (100), **in that** the drain terminal is connected to earth, preferably via a resistor, and **in that** the source terminal is connected to the tap of the voltage divider (88, 89) directly or via further components.

5. Drive unit according to any of the preceding claims, **characterized in that** a series circuit of light-emitting diodes is in each case connected in series with a transistor (61), and **in that** the current regulation signal for regulating the current through the series circuit of light-emitting diodes is passed to the base of the transistor (61).

6. Drive unit according to any of the preceding claims, **characterized in that** a series circuit of light-emitting diodes is in each case connected in series with a resistor (62) connected to earth at one end, wherein, for the purpose of generating the current regulation signal, the voltage dropped across the resistor and a reference voltage are applied to a comparator circuit.

7. Display instrument in a vehicle, **characterized in that** the display device has at least one series circuit of light-emitting diodes which is operated by a drive device according to any of the preceding claims.

8. Method for operating at least one series circuit of light-emitting diodes wherein an operating voltage of the at least one series circuit of light-emitting diodes is chosen depending on a current regulation signal for controlling the current through one of the at least one series circuit of light-emitting diodes, wherein, for each series circuit (2, 21, 22, 23) of light-emitting diodes (3), a current regulation unit (8, 31, 32, 33) regulates the current through the respective series circuit of the light-emitting diodes by means of a current regulation signal, and wherein the current regulation unit (8, 31, 32, 33) transmits the current regulation signal to the voltage regulation unit (5, 15) as well, wherein the current regulation signal is forwarded to the voltage regulation unit (5, 15) via a connection (10),
**characterized in that**
the voltage regulation unit (5, 15) has a voltage divider (88, 89), **in that** the voltage divider (88, 89) is connected between the operating voltage of the at least one series circuit of light-emitting diodes, said operating voltage being provided by the voltage regulation unit (5, 15), and earth, **in that** a tap of the voltage divider (88, 89) is connected to an input of a first regulation stage (85) for setting the operating voltage of the at least one series circuit of light-emitting diodes, **in that** the current regulation signal is applied to a second regulation stage (96) of the voltage regulation unit (5, 15), and **in that** the tap of the voltage divider and the input of the first regulation stage (85) are connected to an output of the second regulation stage (96) in such a way that the voltage at the tap of the voltage divider is reduced in the event of a predefined voltage of the current regulation signal being exceeded.

9. Method according to Claim 8, **characterized in that** the operating voltage of the at least one series circuit of light-emitting diodes is increased until the voltage of the current regulation signal of all series circuits of light-emitting diodes passes a predefined limit.

## Revendications

1. Dispositif de commande pour au moins un circuit série (2, 21, 22, 23) de plusieurs diodes électroluminescentes (3), comprenant une unité de régulation de tension (5, 15) destinée à réguler une tension de service pour l'au moins un circuit série (2, 21, 22, 23) des diodes électroluminescentes (3), une unité de régulation de courant (8, 31, 32, 33) étant présente pour chaque circuit série (2, 21, 22, 23) de diodes électroluminescentes (3), servant à réguler le courant à travers le circuit série de diodes électroluminescentes respectif au moyen d'un signal de régulation de courant et l'unité de régulation de courant (8, 31, 32, 33) étant reliée à l'unité de régulation de tension (5, 15) en vue de transmettre le signal de régulation de courant également à l'unité de régulation de tension (5, 15), le signal de régulation de courant étant transféré à l'unité de régulation de tension (5, 15) par le biais d'une liaison,
**caractérisé en ce que**
l'unité de régulation de tension (5, 15) possède un diviseur de tension (88, 89), **en ce que** le diviseur de tension (88, 89) est branché entre la tension de service de l'au moins un circuit série de diodes électroluminescentes, délivrée par l'unité de régulation de tension (5, 15), et la masse, **en ce qu'**une prise du diviseur de tension (88, 89) est reliée à une entrée d'un premier étage de régulation (85) pour régler la tension de service de l'au moins un circuit série de diodes électroluminescentes, **en ce qu'**un deuxième étage de régulation (96) de l'unité de régulation de tension (5, 15) est alimenté avec le signal de régulation de courant et **en ce que** le prise du diviseur de tension et l'entrée du premier étage de régulation (85) sont reliées à une sortie du deuxième étage de régulation (96) de telle sorte qu'en cas de dépassement d'une tension prédéfinie du signal de régulation de courant, la tension au niveau de la prise du diviseur de tension est abaissée.

2. Unité de commande selon l'une des revendications précédentes, **caractérisée en ce que** les signaux de régulation de courant de tous les circuits série de diodes électroluminescentes sont appliqués à une entrée (10, 25) de l'unité de régulation de tension (5, 15).

3. Unité de commande selon l'une des revendications précédentes, **caractérisée en ce que** l'unité de régulation de tension (5, 15) possède un convertisseur élévateur pour générer une tension de service de l'au moins un circuit série de diodes électroluminescentes.

4. Unité de commande selon l'une des revendications précédentes, **caractérisée en ce que** le deuxième étage de régulation (96) possède un transistor à effet de champ (100), **en ce que** le signal de régulation de courant est acheminé à la gâchette du transistor à effet de champ (100), **en ce que** la borne de drain est reliée à la masse, de préférence par le biais d'une résistance, et **en ce que** la borne de source est reliée à la prise du diviseur de tension (88, 89) directement ou par le biais de composants supplémentaires.

5. Unité de commande selon l'une des revendications précédentes, **caractérisée en ce qu'**un circuit série de diodes électroluminescentes respectif est branché en série avec un transistor (61) et **en ce que** le signal de régulation de courant est acheminé à la base du transistor (61) pour la régulation du courant à travers le circuit série de diodes électroluminescentes.

6. Unité de commande selon l'une des revendications précédentes, **caractérisée en ce qu'**un circuit série de diodes électroluminescentes respectif est branché en série avec une résistance (62), laquelle est reliée par un côté à la masse, un circuit comparateur étant alimenté avec la tension de chute aux bornes de la résistance et avec une tension de référence en vue de générer le signal de régulation de courant.

7. Instrument d'affichage dans un véhicule, **caractérisé en ce que** le dispositif d'affichage possède au moins un circuit série de diodes électroluminescentes, lequel fonctionne avec un dispositif de commande selon l'une des revendications précédentes.

8. Procédé pour faire fonctionner au moins un circuit série de diodes électroluminescentes, une tension de service de l'au moins un circuit série de diodes électroluminescentes étant choisie en fonction d'un signal de régulation de courant servant à réguler le courant à travers l'un parmi l'au moins un circuit série de diodes électroluminescentes, pour chaque circuit série (2, 21, 22, 23) de diodes électroluminescentes (3), une unité de régulation de courant (8, 31, 32, 33) régulant le courant à travers le circuit série de diodes électroluminescentes respectif au moyen d'un signal de régulation de courant et l'unité de régulation de courant (8, 31, 32, 33) transmettant également le signal de régulation de courant à l'unité de régulation de tension (5, 15), le signal de régulation de courant étant transféré à l'unité de régulation de tension (5, 15) par le biais d'une liaison (10),
**caractérisé en ce que**
l'unité de régulation de tension (5, 15) possède un diviseur de tension (88, 89), **en ce que** le diviseur de tension (88, 89) est branché entre la tension de service de l'au moins un circuit série de diodes électroluminescentes, délivrée par l'unité de régulation de tension (5, 15), et la masse, **en ce qu'**une prise du diviseur de tension (88, 89) est reliée à une entrée d'un premier étage de régulation (85) pour régler la tension de service de l'au moins un circuit série de diodes électroluminescentes, **en ce qu'**un deuxième étage de régulation (96) de l'unité de régulation de tension (5, 15) est alimenté avec le signal de régulation de courant et **en ce que** la prise du diviseur de tension et l'entrée du premier étage de régulation (85) sont reliées à une sortie du deuxième étage de régulation (96) de telle sorte qu'en cas de dépassement d'une tension prédéfinie du signal de régulation de courant, la tension au niveau de la prise du diviseur de tension est abaissée.

9. Procédé selon la revendication 8, **caractérisé en ce que** la tension de service de l'au moins un circuit série de diodes électroluminescentes est augmentée jusqu'à ce que la tension du signal de régulation de courant de tous les circuits série de diodes électroluminescentes a franchi une limite prédéfinie.
